# DEMANDE DE BREVET EUROPEEN

(11) **EP 1 048 933 A1**
(43) Date de publication de la demande: **02.11.2000**
(21) Numéro de dépôt: 00401087.2
(22) Date de dépôt: 19.04.2000
(51) Int. Cl.: G01D 18/00, G01D 3/02, G01M 15/00

(54) **Dispositif d'identification de capteur pour banc d'essais**

(30) Priorité: 27.04.1999 FR 9905305
(71) Demandeur: Condiacq, 78190 Trappes (FR)
(72) Inventeur: Dourille, Alain, 78990 Elancourt (FR); Drecq, Daniel, 78610 Saint Leger en Yvelines (FR); Le Roy, Christian, 78430 Louveciennes (FR)
(74) Mandataire: Abello, Michel

(57) **Abrégé**

Dispositif d'identification automatique d'un capteur (C1, C2, C3 ...) de paramètre(s) utilisé sur banc d'essais, ce capteur étant relié à des moyens d'analyse des informations qu'il fournit, ces moyens d'analyse devant appliquer aux informations qu'ils reçoivent un traitement approprié tenant compte du type de capteur dont proviennent les informations, en particulier tenant compte du calibrage de ce capteur, lequel comporte un moyen de connexion (J1, J2, J3 ...) propre à être engagé dans, ou sur, une embase (E1, E2, E3 ...) reliée aux moyens d'analyse. Le moyen de connexion (J1, J2, J3 ...) du capteur comporte un élément d'identification (I1, I2, I3 ...) de ce capteur et l'embase (E1, E2, E3 ...) comporte des moyens (12) pour communiquer sans contact mécanique avec l'élément d'identification (I1, I2, I3 ...), propres à renseigner les moyens d'analyse sur le capteur qui leur envoie des informations. L'élément d'identification (I1, I2, I3 ...) est constitué par une capsule de transpondeur (11) logée dans le moyen de connexion (J1, J2, J3 ...).

## Description

L'invention est relative à un dispositif d'identification automatique de capteur(s) de paramètre(s), tels que température, pression, fréquence, vitesse, ou analogues, utilisé sur un banc d'essais.

L'invention concerne plus particulièrement, mais non exclusivement, un tel dispositif pour banc d'essais de moteurs, notamment de moteurs thermiques, ou pour banc d'essais d'organes dans l'industrie automobile.

De tels bancs d'essais intègrent un nombre important de capteurs et les mesures associées sont de plus en plus complexes.

Pour chaque essai, ou campagne d'essais, un opérateur doit identifier manuellement l'ensemble des capteurs dans le respect de procédures ou de normes. Cette étape a pour but de garantir le caractère répétitif et le respect des conditions de réalisation de l'essai. Une telle manière de procéder nécessite du temps pour l'identification des capteurs et exige un strict respect des procédures afin d'éviter toute erreur de saisie. Pour chaque contrôle au cours d'une campagne d'essais l'opérateur doit rééditer toute la procédure pour l'identification de l'ensemble des capteurs.

Par manque de temps principalement, l'exactitude de la liste des capteurs utilisés n'est pas garantie.

Or, pour une analyse correcte des informations fournies par un capteur, il faut un traitement approprié de ces informations tenant compte du type du capteur, en particulier de son calibrage, et éventuellement du calibrage de composants, par exemple amplificateurs, par lesquels transitent les informations du capteur avant d'arriver aux moyens d'analyse.

En résumé, l'opérateur avant chaque essai ou campagne d'essais doit assurer le branchement de chaque capteur à un élément ou unité de contrôle en repérant la voie sur laquelle se fait le branchement pour qu'à l'arrivée, dans une armoire d'acquisition de données, on puisse faire correspondre à une voie donnée le capteur qui va envoyer les informations sur cette voie.

Et pour chaque voie, il faut tenir compte du calibrage du capteur et éventuellement du calibrage de composants intermédiaires.

Dans la mesure où il y a un grand nombre de capteurs à relier à l'armoire d'acquisition, le branchement de toutes les voies va constituer un travail long et difficile ; si deux voies sont inversées, ou si une voie n'est pas convenablement renseignée quant au calibrage, un certain nombre d'informations vont manquer ou vont être interprétées de manière inexacte ou imprécise, ce qui peut être extrêmement gênant et même conduire à recommencer l'essai.

L'invention a donc pour but, surtout, d'éviter les inconvénients exposés ci-dessus et de fournir un dispositif d'identification automatique d'un capteur de paramètre(s) utilisé sur un banc d'essais, ce capteur étant relié à un moyen de connexion propre à être engagé dans, ou sur, une embase reliée à des moyens d'analyse des informations dudit capteur, ces moyens d'analyse devant appliquer aux informations qu'ils reçoivent un traitement approprié tenant compte du type de capteur dont proviennent les informations, en particulier tenant compte du calibrage de ce capteur.

Selon l'invention, le dispositif d'identification automatique est caractérisé par le fait que le moyen de connexion du capteur comporte un élément d'identification de ce capteur et que l'embase comporte des moyens de communication sans contact mécanique avec l'élément d'identification, propres à renseigner les moyens d'analyse sur le capteur qui leur envoie des informations.

Avantageusement, l'élément d'identification du capteur est une capsule de transpondeur logée dans le moyen de connexion. Ce moyen de connexion est généralement formé par une fiche ou un connecteur.

Les moyens de communication comprennent un émetteur/ récepteur propre à établir une liaison HF avec la capsule de transpondeur pour assurer une télé-alimentation du transpondeur, une lecture et/ou une écriture dans ce transpondeur, et une antenne logée dans chaque embase.

Le dispositif d'identification peut comporter, pour chaque capteur à identifier, une base unique comprenant une unité de contrôle, un émetteur/récepteur et une antenne.

En variante, une base unique comprend une seule unité de contrôle et un seul émetteur/récepteur pour plusieurs capteurs avec connecteurs, tandis qu'une antenne est prévue dans chaque embase de connecteur, ces antennes communiquant par multiplexage avec un ensemble de transpondeurs situés dans les connecteurs liés aux capteurs.

Généralement chaque capteur est associé à un conditionneur situé à proximité du capteur et présentant un calibrage pris en compte par les moyens d'analyse. Ces moyens d'analyse sont situés à distance, par exemple plusieurs mètres, des capteurs et comportent une armoire d'acquisition de données. La liaison entre l'armoire et les conditionneurs est soit analogique soit numérique en fonction de la caractéristique du conditionneur (analogique ou numérique). L'armoire d'acquisition de données comporte, pour une liaison analogique, un convertisseur analogique/numérique et, pour une liaison numérique, une carte de liaison numérique. Bien entendu, les voies associées à certains capteurs peuvent être analogiques alors que d'autres voies associées à d'autres capteurs peuvent être numériques de sorte que l'armoire d'acquisition de données peut comprendre, à la fois, des convertisseurs analogique/numérique et des cartes de liaison numérique.

Les moyens d'analyse comprennent avantageusement une unité informatique, en particulier un micro-ordinateur notamment de type PC, auquel est reliée la sortie du convertisseur analogique/numérique.

La capsule de transpondeur comporte une zone d'identification numérique ; elle peut comporter également une zone d'écriture où peut être écrite une information relative au calibrage du capteur et/ou au moment où le dernier calibrage a eu lieu.

L'invention concerne également un banc d'essais, en particulier pour moteur thermique ou pour organe tel que boîte de vitesses, frein ou embrayage de véhicule automobile, comprenant des capteurs installés sur le matériel à essayer et reliés à des moyens d'analyse des informations fournies, et comportant un dispositif d'identification automatique tel que défini précédemment pour chaque capteur de paramètres.

L'invention consiste, mises à part les dispositions exposées ci-dessus, en un certain nombre d'autres dispositions dont il sera plus explicitement question ci-après à propos d'exemples de réalisation décrits en se référant au dessin annexé, lesdits exemples étant donnés à titre purement illustratif et n'étant aucunement limitatifs.

Sur ce dessin :
- la figure 1 est une vue schématique en élévation d'une installation avec banc d'essais de moteur selon l'invention ;
- la figure 2A est un schéma de la liaison analogique, avec les moyens d'analyse, d'un capteur de l'installation de la figure 1 ;
- la figure 2B représente une variante de la figure 2A dans le cas d'une liaison numérique d'un capteur avec les moyens d'analyse ;
- la figure 3 illustre schématiquement le dispositif d'identification automatique de capteur selon l'invention ;
- la figure 4 est un schéma d'une installation avec plusieurs dispositifs d'identification et plusieurs capteurs ;
- la figure 5 est un schéma en perspective d'un montage en parallèle de deux embases de connecteurs ; et
- la figure 6 est un schéma d'un montage en série de deux embases de connecteurs.

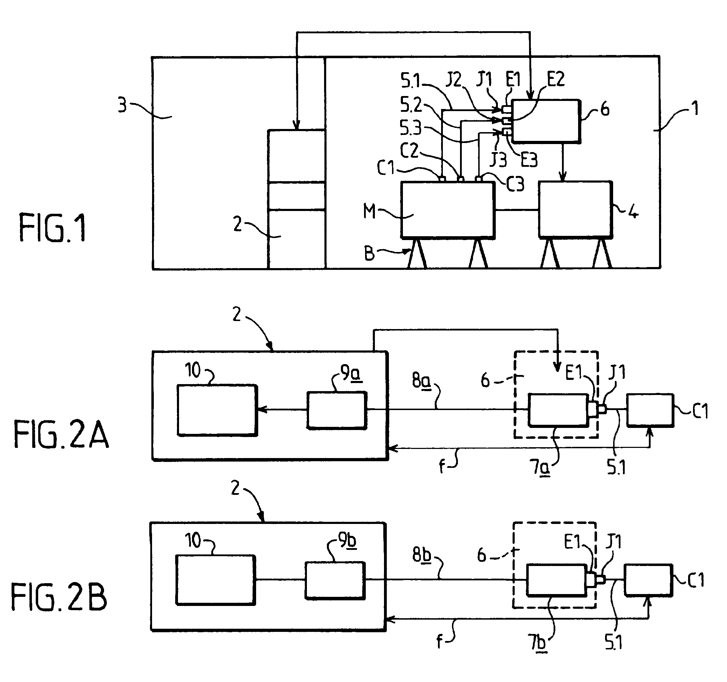

En se reportant à la figure 1, on peut voir une installation d'essais de moteurs thermiques comprenant une salle d'essais 1 dans laquelle se trouve le banc d'essais B proprement dit sur lequel est installé un moteur M à contrôler. Une armoire 2 d'acquisition de données est disposée dans une zone protégée 3 située hors de la salle d'essais 1. Sur le schéma, la zone 3 a été représentée à proximité de la salle 1. Cette zone protégée ou salle de contrôle 3 peut se trouver à distance, par exemple à une distance de l'ordre d'une dizaine de mètres de la salle d'essais 1.

Le moteur M est accouplé à une charge 4 constituée par un frein, par exemple un frein à courants de Foucault. Le moteur est équipé de capteurs C1, C2, C3 ... de paramètres, tels que pression, température, fréquence, ou analogues. Chaque capteur convertit une grandeur physique en une grandeur électrique.

Les capteurs Cl, C2, C3 ... sont reliés par des câbles 5.1, 5.2, 5.3 à un ensemble ou unité de contrôle 6 placé à proximité du banc d'essais B, dans la salle d'essais 1.

Comme montré sur les figures 2A ou 2B, chaque capteur, tel que C1, envoie ses signaux électriques sur un conditionneur 7a ou 7b, respectivement, placé dans l'ensemble de contrôle 6. Un conditionneur est un système permettant de conditionner un capteur en termes d'amplification, de linéarisation, d'alimentation ou similaires. Il peut être soit dédié à un seul type de capteur, soit programmable pour s'adapter à plusieurs types de capteurs, comme par exemple un thermocouple, une sonde PT 100, un pont de jauges, une résistance ou analogue.

Le conditionneur 7a ou 7b transforme le signal du capteur C1 de façon qu'il puisse être envoyé en dehors de la salle d'essais 1 vers l'armoire d'acquisition de données 2. En effet, un capteur tel que C1 fournit un signal électrique relativement faible, de quelques milliampères ou quelques millivolts, qui ne peut être transmis tel quel sur une distance d'une dizaine de mètres ou plus. Le conditionneur 7a ou 7b comporte donc généralement un ou plusieurs amplificateurs du signal fourni.

L'ensemble de contrôle 6 non seulement reçoit des informations provenant des capteurs mais également peut fournir des informations, en particulier à la charge 4. Par exemple, dans le cas où la charge 4 est constituée par un frein à courants de Foucault, l'ensemble de contrôle 6 peut faire varier cette charge 4 en faisant varier l'alimentation électrique des bobines du frein pour obtenir la vitesse de rotation souhaitée du moteur thermique M.

Sur les figures 2A et 2B, on voit que chaque conditionneur 7a ou 7b est relié par un câble 8a ou 8b, respectivement, à l'armoire d'acquisition de données 2 qui comporte un convertisseur 9a ou 9b, respectivement, associé au conditionneur 7a ou 7b. Pour la réalisation de la figure 2A, le conditionneur 7a est analogique de même que la liaison a le câble 8a et le convertisseur 9a est un convertisseur analogique/ numérique ; au contraire, pour la réalisation de la figure 2B, le conditionneur 7b est numérique de même que la liaison par le câble 8b et le convertisseur 9b est une carte de liaison numérique. La sortie du convertisseur 9a ou 9b alimente, dans les deux cas, une unité informatique 10, par exemple un micro-ordinateur de type PC.

Le conditionneur 7a ou 7b, le câble de liaison 8a ou 8b et le convertisseur 9a ou 9b reliés en série à une entrée de l'unité informatique 10, constituent une voie sur laquelle est effectué le branchement du capteur C1.

Pour chaque voie il faut tenir compte, au niveau de l'unité informatique 10, des caractéristiques propres à cette voie, notamment du calibrage du capteur C1, du calibrage du conditionneur 7a ou 7b et du calibrage du convertisseur 9a ou 9b, pour que l'unité 10 interprète correctement les signaux provenant de cette voie.

Ainsi, l'unité informatique 10 doit être renseignée sur les composants branchés sur chacune de ses entrées. Même si le convertisseur 9a ou 9b et le conditionneur 7a ou 7b sont branchés en permanence sur une même entrée de l'unité 10, ce qui permet de prendre en compte à priori les caractéristiques de ces composants, le capteur branché sur le conditionneur 7a ou 7b peut varier, soit volontairement, soit par suite d'une erreur, et il convient donc que l'unité informatique 10 soit renseignée sur les caractéristiques du capteur de la voie considérée.

L'invention permet d'automatiser l'identification des capteurs C1, C2, C3 ...

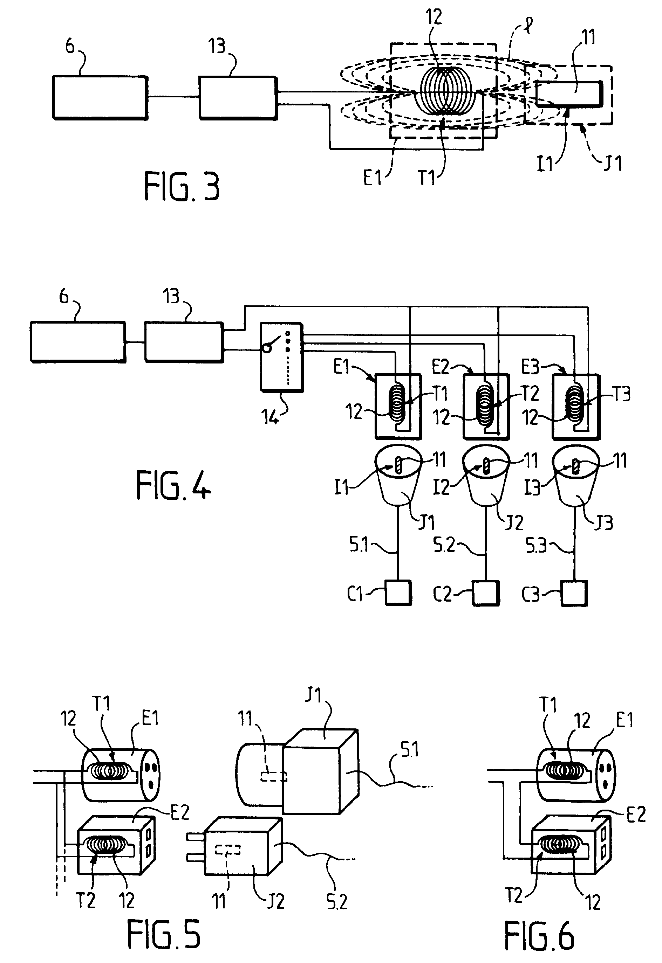

Chaque capteur C1, C2, C3 ... comporte, à l'extrémité de son câble de liaison 5.1, 5.2, 5.3 à raccorder à l'ensemble de contrôle 6, un moyen de connexion J1, J2, J3 (figure 4) formé par une fiche ou un connecteur propre à être engagé mécaniquement dans, ou sur, une embase E1, E2, E3... reliée aux moyens d'analyse, et pouvant être prévue (figure 1) sur l'ensemble de contrôle 6.

Pour chaque capteur, tel que C1, le moyen de connexion J1 comporte un élément d'identification I1, tandis que l'embase E1 comporte des moyens T1 pour communiquer sans contact mécanique avec l'élément d'identification I1 et pour renseigner les moyens d'analyse 10 sur le capteur C1 qui leur envoie des informations.

L'élément d'identification I1 ou identifieur, est avantageusement constitué par une capsule de transpondeur 11 qui comporte une zone d'identification dans laquelle est écrit un code d'identification unique. La zone d'identification est avantageusement de 40 bits au plus, ce qui donne 16¹⁰ possibilités au maximum.

Selon une variante, la capsule d'identification 11 du capteur peut être une capsule sur laquelle une information peut être écrite et enregistrée. Les figures 2A et 2B illustrent schématiquement, par une liaison fonctionnelle f, cette possibilité d'écriture d'une information sur la capsule du capteur C1 à partir de l'armoire d'acquisition de données 2. Comme exemples d'utilisation du mode écriture sur le transpondeur on peut donner les opérations suivantes :
- enregistrer l'historique ou la dernière date de calibrage ;
- enregistrer la table de calibrage ou les coefficients du polynôme de correction ;
- enregistrer le temps de fonctionnement du capteur (compteur horaire) global et/ou depuis le dernier calibrage ;
- enregistrer l'historique des lieux de fonctionnement (n° du banc, n° de la voie de mesure ...).

Les moyens T1 pour communiquer avec la capsule de transpondeur 11 comprennent une antenne 12 logée dans l'embase E1 et permettant d'établir une liaison HF entre un émetteur/récepteur 13 et le transpondeur 11, par couplage inductif.

Des exemples d'émetteurs/récepteurs et de transpondeurs pouvant convenir sont fournis ci-après avec mention des fabricants:
- Société TEMIC ( US)
   Emetteur/récepteur : U2270B
   Transpondeur : E5530 - E 5550 - E5560 - TK5530 - TK5550 -TK 5560
- Société PHILIPS SEMICONDUCTORS ( US)
   Emetteur/récepteur : HTRC110
   Transpondeur : Produits Hitag 2 - HT DC20 S20
- Société MICROCHIP ( US)
   Transpondeur : MCRF200 - MCRF250
- Société SOKYMAT (CH)
   Transpondeur : gélule réf. 601200

La liaison HF assure trois fonctions :
- la télé-alimentation en énergie du transpondeur 11 ;
- la lecture du transpondeur 11 ;
- l'écriture éventuelle sur le transpondeur 11.

Le rayonnement de l'antenne 12 est schématisé sur la figure 3 par des lignes de champ 1 en pointillé.

La capsule de transpondeur 11 peut être intégrée à un grand nombre de connecteurs, par exemple des connecteurs cylindriques, des connecteurs compensés pour thermocouple.

Deux exemples d'architecture peuvent être envisagés.

Comme illustré sur la figure 3, une base unique peut être prévue comprenant une unité de contrôle 6, un émetteur/récepteur 13 et une antenne 12 pour chaque capteur à identifier. L'ensemble (unité de contrôle 6 et émetteur/récepteur 13) peut, par exemple, faire partie intégrante du conditionneur 7.

Selon une autre possibilité schématisée sur la figure 4, une base unique comprend une seule unité de contrôle 6 et un seul émetteur/récepteur 13 pour plusieurs capteurs avec connecteurs J1, J2, J3. Une antenne 12 est prévue dans chaque embase E1, E2, E3 et ces antennes 12 communiquent par multiplexage avec un ensemble de transpondeurs situés dans les connecteurs liés aux capteurs.

La fonction multiplexage peut être réalisée par un commutateur 14, ou sélecteur, intégré à chaque conditionneur comportant une unité de contrôle 6 et un émetteur/récepteur 13. Le commutateur 14 permet de brancher séparément et successivement chaque antenne sur l'émetteur/ récepteur 13 de sorte que les moyens d'analyse peuvent correctement identifier la provenance des signaux qu'ils reçoivent. Selon une autre possibilité, la fonction multiplexage peut être assurée par un système à part entière.

Les architectures évoquées précédemment s'articulent autour d'un groupe constitué d'une antenne, d'une embase, d'un connecteur, et d'un transpondeur.

Il est possible de mettre en parallèle (figure 5) ou en série (figure 6) plusieurs antennes 12 pour contrôler plusieurs embases E1, E2, sans faire intervenir une fonction de multiplexage. On obtient alors un groupe constitué de N (N étant un nombre entier quelconque) antennes, de N embases, d'un connecteur et d'un transpondeur.

Dans ce cas, un seul connecteur J1 ou J2 avec transpondeur 11 doit être connecté à l'une des N embases constituant le groupe. Si par inadvertance plusieurs connecteurs sont connectés simultanément sur plusieurs des N embases, le système le détecte et avertit l'utilisateur.

Selon l'invention, il n'y a plus besoin de repérer les voies de branchement des capteurs et les caractéristiques des calibrages correspondants puisque l'identification des capteurs est automatique et permet de recueillir correctement toutes les informations, quelle que soit la modalité de branchement retenue.

Le dispositif de l'invention peut facilement s'intégrer aux bancs d'essais actuels ou futurs. Il offre l'avantage de pouvoir gérer et suivre individuellement, par l'intermédiaire d'une base de données, chacun des capteurs utilisés sur un site.

## Revendications

1. Dispositif d'identification automatique d'un capteur de paramètres (C1, C2, C3 ...) utilisé sur banc d'essais, ce capteur étant relié à un moyen de connexion (J1, J2, J3 ...) propre à être engagé dans, ou sur, une embase (E1, E2, E3 ...) reliée à des moyens d'analyse (2, 10) des informations dudit capteur, ces moyens d'analyse (2, 10) devant appliquer aux informations qu'ils reçoivent un traitement approprié tenant compte du type de capteur dont proviennent les informations, en particulier tenant compte du calibrage de ce capteur,
caractérisé par le fait que le moyen de connexion (J1, J2, J3 ...) du capteur comporte un élément d'identification (I1, I2, I3 ...) de ce capteur et que l'embase (E1, E2, E3 ...) comporte des moyens (T1, T2 ...) de communication sans contact mécanique avec l'élément d'identification (I1, I2, I3 ...) , propres à renseigner les moyens d'analyse sur le capteur qui leur envoie des informations.

2. Dispositif selon la revendication 1, caractérisé par le fait que l'élément d'identification (I1, I2, I3 ...) du capteur est une capsule de transpondeur (11) logée dans le moyen de connexion (J1, J2, J3 ...), généralement formé par une fiche ou un connecteur.

3. Dispositif selon la revendication 1 ou 2, caractérisé par le fait que les moyens de communication (T1, T2 ...) comprennent un émetteur/récepteur (13) propre à établir une liaison HF avec la capsule de transpondeur (11) pour assurer une télé-alimentation du transpondeur, une lecture et/ou une écriture dans ce transpondeur, et une antenne (12) logée dans chaque embase (E1, E2, E3 ...).

4. Dispositif selon la revendication 3, caractérisé par le fait qu'il comporte une base unique comprenant une unité de contrôle (6), un émetteur/récepteur (13) et une antenne (12) pour chaque capteur à identifier.

5. Dispositif selon la revendication 3, caractérisé par le fait qu'il comporte une base unique comprenant une seule unité de contrôle (6) et un seul émetteur/récepteur (13) pour plusieurs capteurs (C1, C2, C3) avec connecteurs (J1, J2, J3) , tandis qu' une antenne (12) est prévue dans chaque embase de connecteur (E1, E2, E3), ces antennes (12) communiquant par multiplexage avec un ensemble de transpondeurs (11) situés dans les connecteurs liés aux capteurs.

6. Dispositif selon l'une des revendications précédentes, caractérisé par le fait que chaque capteur (C1, C2, C3 ...) est associé à un conditionneur (7a ou 7b) situé à proximité du capteur et présentant un calibrage pris en compte par les moyens d'analyse.

7. Dispositif selon l'une des revendications précédentes, caractérisé par le fait que les moyens d'analyse (2, 10) sont situés à distance des capteurs et comportent une armoire d'acquisition de données (2) avec convertisseur analogique/numérique (9a).

8. Dispositif selon l'une des revendications précédentes, caractérisé par le fait que les moyens d'analyse (2, 10) sont situés à distance des capteurs et comportent une armoire d'acquisition de données (2) avec carte de liaison numérique (9b).

9. Dispositif selon l'une des revendications précédentes, caractérisé par le fait que les moyens d'analyse comprennent un micro-ordinateur (10).

10. Dispositif selon la revendication 2, caractérisé par le fait que la capsule de transpondeur (11) comporte une zone d'identification numérique.

11. Dispositif selon l'une des revendications 2 ou 10, caractérisé par le fait que la capsule de transpondeur (11) est susceptible d'enregistrer une information, relative au calibrage du capteur et/ou au moment où le dernier calibrage a eu lieu.

12. Banc d'essais, en particulier pour moteur thermique ou pour organe, tel que boîte de vitesses, frein ou embrayage de véhicule automobile, comprenant des capteurs (C1, C2, C3 ...) installés sur le matériel à essayer et reliés à des moyens d'analyse (10) des informations fournies, comportant un dispositif d'identification automatique pour chaque capteur de paramètres selon l'une des revendications précédentes.
